# EUROPÄISCHE PATENTSCHRIFT

(11) **EP 0 450 113 B1**
(45) Veröffentlichungstag und Bekanntmachung des Hinweises auf die Patenterteilung: **21.06.1995**
(21) Anmeldenummer: 90106287.7
(22) Anmeldetag: 02.04.1990
(51) Int. Cl.: G05B 19/42, G05B 19/406

(54) **Digitalisier-Verfahren mit Kollisionsprüfung**
Digitizing method with collision testing
Méthode de digitalisation avec test de collision

(43) Veröffentlichungstag der Anmeldung: 09.10.1991
(73) Patentinhaber: Dr. Johannes Heidenhain GmbH, D-83292 Traunreut (DE)
(72) Erfinder: Schwefel, Ernst, Dipl.-Phys., D-8225 Traunreut (DE)

(56) Entgegenhaltungen:
- EP-A- 0 328 750
- DE-A- 3 816 933
- GB-A- 2 140 937
- VDI ZEITSCHRIFT. vol. 125, no. 17, September 1983, DUSSELDORF DE Seiten 647 -652; Schöling und Reles: "Offline-Kollisionskontrolle bei Industrierobotern"

## Beschreibung

Die Erfindung bezieht sich auf ein Verfahren zum Erfassen von Geometriedaten räumlicher Modelle nach dem Oberbegriff des Anspruches 1.

Die Herstellung von Werkstücken mit beispielsweise räumlich gekrümmten Flächen gehört zu den anspruchsvollsten Zerspanungsaufgaben. In der Vergangenheit sind zu diesem Zweck vor allem die Nachformtechniken immer mehr verbessert worden.

Seit der breiten Einführung der numerisch gesteuerten Bearbeitungsmaschinen wurde jedoch der Weiterentwicklung der sogenannten Kopierfräsmaschinen nicht mehr sehr viel Aufmerksamkeit geschenkt.

Erst in jüngster Zeit gewinnt die Nachformung räumlicher Modelle wieder an Bedeutung, und zwar durch die Anwendung der NC-Technologie bei Maschinen für die Nachformung von mathematisch schwer zu beschreibenden Freiformflächen.

Bei komplexen Formen im Karosseriebau oder auch bei ganz normalen Gebrauchsgütern wie Schuhwerk und Gehäusen für Telefone, Bügeleisen usw. ist man mit der konventionellen NC-Fertigung schnell am Ende. Aus diesem Grunde wird häufig ein physikalisches Modell abgetastet, das durch den Designer geschaffen, im Strömungskanal optimiert oder durch einen erfahrenen Werkzeug- und Formenbauer entwickelt wurde. Das Urmodell wird dabei zeilenweise abgefahren, ähnlich dem Kopierfräsen. Unterschiedlich ist jedoch, daß nicht direkt ein Werkzeug mitläuft, das die Kopie des Modells erstellt. Vielmehr wird die Oberfläche in Form vieler einzelner Punkte erfaßt und auf einem Massenspeicher (Floppy-Disk, Winchester) abgelegt. Diesen Vorgang nennt man "Digitalisieren". Ist die Punktedichte groß genug, repräsentiert die Menge aller Einzelpunkte das Modell. Die so erhaltenen Einzelpunkte können nun mit rechnertechnischen Möglichkeiten bearbeitet werden.

In einem Bericht in der Zeitschrift "Werkzeug & Formenbau" vom Juni 1987 ist auf den Seiten 78 und 80 eine derartige Anordnung beschrieben.

Eine ähnliche Anordnung ist in der DE-PS 27 42 344 beschrieben, bei der die Abtastung eines Profils eines Werkstückes mit einer Geschwindigkeitssteuerung erfolgt, die vom Tastsignal abhängig ist. Dort ist in Verbindung mit einem Taktgeber eine digitale Ermittlung der Werkstückkontur möglich, wobei die Impulsfolgefrequenz bzw. die Impulslänge ein Maß für die Steigung des Profils darstellen.

Des weiteren ist aus der EP-A2-0 328 750 eine Nachformeinrichtung bekannt, bei der Werkstücke von einem Meßfühler abgetastet werden, der mit Hilfe einer numerischen Steuereinrichtung Konturen der Werkstücke ermittelt. Die Tastsignale des Meßfühlers werden sowohl zur Bildung der Geometriedaten des Werkstücks als auch zur Kollisionsprüfung des Werkstückes mit Werkzeugen verwendet.

Aus der GB-A- 2 140 937 sind ein Verfahren und eine Vorrichtung bekannt, mit denen ein Bearbeitungsvorgang simuliert wird, so daß eine Kollisionsprüfung erfolgen kann. Die Daten zur Darstellung von Werkstück, Spannmittel und Werkzeug liegen von vornherein vor und werden per Eingabeeinheit als Programmdaten eingespeichert.

Ein Digitalisierungsvorgang findet demgemäß nicht statt.

Der Erfindung liegt die Aufgabe zugrunde, durch Erfassen der Geometriedaten mittels Digitalisiervorgang auch eine Kollisionsprüfung während eines Bearbeitungsvorganges und/oder durch Simulation eines späteren Bearbeitungsvorganges zu ermöglichen.

Diese Aufgabe wird durch ein Verfahren mit den Merkmalen des Anspruches 1 gelöst.

Die Vorteile des Verfahrens liegen darin, daß bei der Erfassung der Geometriedaten des Werkstückes mittels der Tastvorgänge auch die unmittelbare Umgebung des Werkstückes - also Spannmittel und gegebenenfalls auch Maschinentisch - ertastet wird.

Aus den Tastersignalen werden Geometriedaten gewonnen, die in einem Speicher abgelegt und mit Werkzeug- bzw. Werkzeugbahndaten verglichen werden können. Bei Kollisionen, d. h. bei Datenkombinationen, die nicht als zulässig definiert sind, kann ein Kollisionssignal erzeugt werden.

Besonders vorteilhaft können durch graphische Simulation an einer Anzeigeeinheit, z. B am Bildschirm einer NC-Steuerung, das Werkstück, die Spannmittel und das Bearbeitungswerkzeug und deren Relativposition sichtbar gemacht werden, was ebenfalls eine Kollisionsprüfung durch den Betrachter ermöglicht.

Mit Hilfe der Zeichnungen soll die Erfindung anhand von Ausführungsbeispielen noch näher erläutert werden.

Es zeigt
- Figur 1: eine Universal-Fräsmaschine;
- Figur 2: eine Drehmaschine;
- Figur 3: eine NC-Steuerung mit Bildschirm;
- Figur 4A: eine mäanderförmige Abtastbahn;
- Figur 4B: zwei überlagerte mäanderförmige Abtastbahnen;
- Figur 4C: konzentrische kreisförmige Abtastbahnen und
- Figur 4D: eine spiralförmige Abtastbahn.

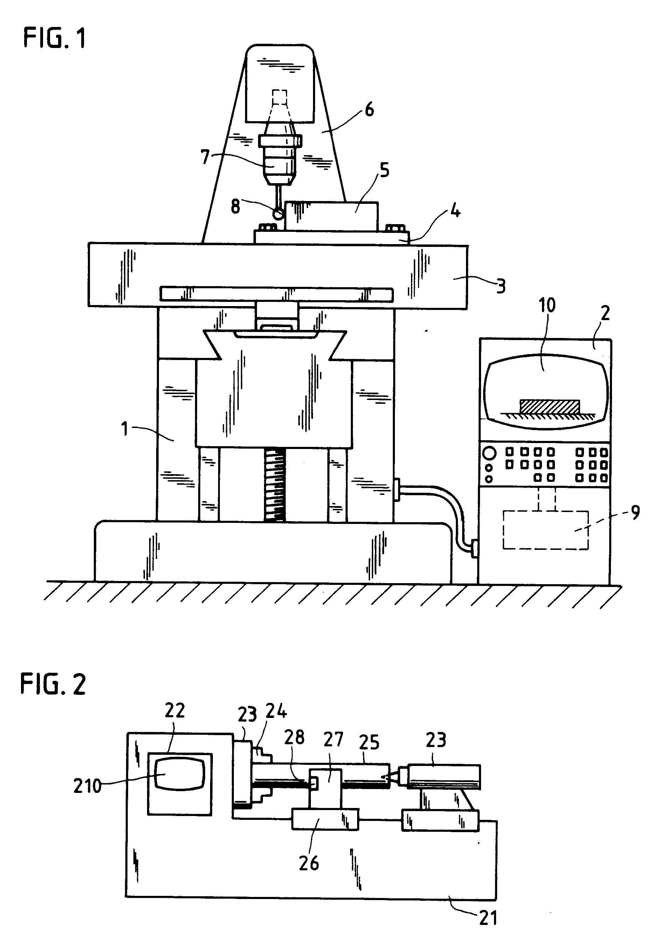

In Figur 1 ist eine Universal-Fräsmaschine 1 dargestellt, die von einer numerischen Steuerung 2 gesteuert wird.

Auf einem Tisch 3 der Universal-Fräsmaschine 1 ist mit Spannmitteln 4 ein Werkstück 5 befestigt. Im Spindelstock 6 der Universal-Fräsmaschine 1 befindet sich ein Mehrkoordinaten-Tastkopf 7, dessen Taststift 8 das Werkstück 5 abtastet. Durch die Abtastung des Werkstückes 5 mittels des Mehrkoordinaten-Tastkopfes 7 wird die Kontur des Werkstückes 5 ermittelt.

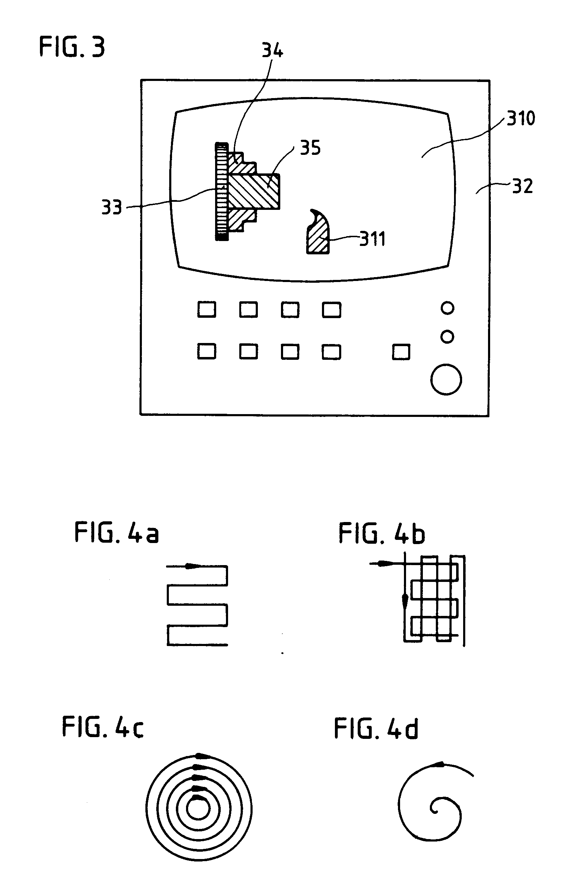

Die Abtastbahn, die sich aus der Relativbewegung des Tisches 3 zum Spindelstock 6 ergibt, kann gemäß Figur 4 mäanderförmig, überlagert mäanderförmig, kreisförmig, spiralförmig oder auch nach anderen Gesetzmäßigkeiten verlaufen.

Die jeweilige Abtastbahn entspricht auch der Relativbewegung zwischen Werkstück 5 und Mehrkoordinaten-Tastkopf 7. Die Tastsignale, die bei der Abtastung des Werkstückes 5 erzeugt werden, dienen zur Bildung der Geometriedaten des Werkstückes 5 und werden in einem Speicher 9 der numerischen Steuerung 2 abgelegt. Dieser Vorgang entspricht dem bereits eingangs beschriebenen "Digitalisieren", da die Geometriedaten des Werkstückes 5 in digitaler Form vorliegen und nun von der numerischen Steuerung 2 weiterverarbeitet werden können.

Erfindungsgemäß tastet der Mehrkoordinaten-Tastkopf 7 aber nicht nur das Werkstück 5, sondern auch die Umgebung des Werkstückes 5 ab, insbesondere die Spannmittel 4 und den Tisch 3 im Bereich der Aufspannung. Die aus diesen Tastsignalen gewonnenen Daten werden ebenfalls im Speicher 9 der numerischen Steuerung 2 abgelegt.

Durch den gesamten Digitalisierungsvorgang liegen nun die geometrischen Daten des Werkstückes 5 und seiner unmittelbaren Umgebung (Spannmittel 4 und Tisch 3) in digitaler Form im Speicher 9 vor. Da im Speicher 9 der numerischen Steuerung 2 auch die Daten der Werkzeuge bzw. der Werkzeugbahnen für die Bearbeitung des Werkstückes 5 in digitaler Form vorliegen, lassen sich auf einfache Weise Kollisionsbetrachtungen durchführen.

Wenn der spätere Bearbeitungsvorgang gemäß Figur 3 vorab auf dem Bildschirm 310 der numerischen Steuerung 32 graphisch simuliert werden soll, dann lassen sich anhand der abgespeicherten - durch den Digitalisierungsvorgang ermittelten - Daten sowohl das Werkstück 35, die Spannmittel 34, der Tisch 33 und das Werkzeug 311 und seine programmierte Bewegungsbahn darstellen, und die Bedienungsperson kann visuell die Kollisionsprüfung durchführen. In Figur 3 ist dies schematisch dargestellt, wobei die Darstellung des Ausführungsbeispiels gemäß Figur 2 gewählt ist. In Figur 2 ist eine Drehmaschine 21 gezeigt, bei der die Erfindung selbstverständlich auch anwendbar ist. Sinngemäß gleichartige Elemente sind mit gleichen Bezugszeichen versehen, denen aber zur Unterscheidung jeweils die Figurenziffer vorangestellt ist.

Die Angabe, daß nicht nur das Werkstück, sondern auch seine Umgebung zur Digitalisierung abgetastet wird, schließt die Abtastung von Werkzeugen und deren Halterungen ein.

## Patentansprüche

1. Verfahren zum Erfassen von Geometriedaten räumlicher Werkstücke (5), die mit Spannmitteln (4) auf einer Maschine (1) befestigt sind, mit einem Tastkopf (7), der mit Hilfe einer numerischen Steuerungseinrichtung (2) Konturen des Werkstückes (5) ermittelt, dadurch gekennzeichnet, daß der Tastkopf (7) auch die Spannmittel (4) und gegebenenfalls die Werkzeuge (311) abtastet, wobei die Tastsignale des Tastkopfes (7) sowohl zur Bildung der Geometriedaten des Werkstückes (5) als auch zur Kollisionsprüfung zwischen Werkstücken (5), Spannmitteln (4) und Werkzeugen (311) verwendet werden.

2. Verfahren nach Anspruch 1, dadurch gekennzeichnet, daß die Kollisionsprüfung anhand der durch die Abtastung gewonnenen Daten und der in einem Speicher (9) abgelegten Werkzeug- bzw. Werkzeugbahndaten erfolgt.

3. Verfahren nach Anspruch 2, dadurch gekennzeichnet, daß der Speicher (9) Speicherplätze aufweist, die Bildpunkten einer Anzeigeeinrichtung (10) zugeordnet sind.

4. Verfahren nach Anspruch 2, dadurch gekennzeichnet, daß zur graphischen Simulation von Bearbeitungsvorgängen das Werkstück (35), die Spannmittel (34) und die Werkzeuge (311) an einer Anzeigeeinrichtung (310) graphisch dargestellt werden.

5. Verfahren nach Anspruch 1, dadurch gekennzeichnet, daß der Abtastvorgang mit einem schaltenden Mehrkoordinaten-Tastkopf (7) erfolgt.

6. Verfahren nach Anspruch 1, dadurch gekennzeichnet, daß der Abtastvorgang mit einem messenden Mehrkoordinaten-Tastkopf (27) erfolgt.

7. Verfahren nach Anspruch 1, dadurch gekennzeichnet, daß der Tastkopf (7) beim Abtastvorgang wenigstens eine mäanderförmige Abtastbahn beschreibt.

8. Verfahren nach Anspruch 7, dadurch gekennzeichnet, daß der Tastkopf (7) beim Abtastvorgang zwei mäanderförmige Abtastbahnen beschreibt, die vorzugsweise in einem rechten Winkel zueinander verlaufen.

9. Verfahren nach Anspruch 1, dadurch gekennzeichnet, daß der Tastkopf (7) beim Abtastvorgang konzentrische Kreise beschreibt.

10. Verfahren nach Anspruch 1, dadurch gekennzeichnet, daß der Tastkopf (7) beim Abtastvorgang eine spiralförmige Abtastbahn beschreibt.

## Claims

1. A method of deriving geometrical data from three-dimensional workpieces (5), which are fixed on a machine (1) by clamping means (4), with a sensing head (7) which detects contours of the workpiece (5) with the aid of a numerical control device (2), characterized in that the sensing head (7) also senses the clamping means (4) and if desired the tool (311), wherein the sensing signals of the sensing head (7) are used both for forming the geometrical data of the workpiece (5) and also for collision testing between workpieces (5), clamping means (4) and tools (311).

2. A method according to claim 1, characterized in that the collision testing is effected on the basis of the data derived by the sensing and the tool or tool path data held in a memory (9).

3. A method according to claim 2, characterized in that the memory (9) has memory locations which are associated with the image points of a display device (10).

4. A method according to claim 2, characterized in that the workpiece (35), the clamping means (34) and the tool (311) are represented graphically on a display device (310) for graphical simulation of machining operations.

5. A method according to claim 1, characterized in that the sensing operation is effected with a switching multi-coordinate sensing head (7).

6. A method according to claim 1, characterized in that the sensing operation is effected with a measuring multi-coordinate sensing head (27).

7. A method according to claim 1, characterized in that the sensing head (7) describes at least one meandering sensing path in the sensing operation.

8. A method according to claim 7, characterized in that the sensing head (7) describes two meandering sensing paths in the sensing operation, which paths preferably run at right angles to one another.

9. A method according to claim 1, characterized in that the sensing head (7) describes concentric circles in the sensing operation.

10. A method according to claim 1, characterized in that the sensing head (7) describes a spiral sensing path in the sensing operation.

## Revendications

1. Procédé d'acquisition de données géométriques de pièces à usiner (5) tridimensionnelles fixées sur une machine (1) à l'aide de moyens de bridage (4), au moyen d'une tête palpeuse (7) qui définit des contours de la pièce (5) à l'aide d'un dispositif de commande numérique (2), caractérisé par le fait que la tête palpeuse (7) palpe également les moyens de bridage (4) et le cas échéant les outils (311), les signaux de palpage de la tête palpeuse (7) étant utilisés aussi bien pour la formation des données géométriques de la pièce (5) qu'en vue du contrôle de collision entre les pièces (5), les moyens de bridage (4) et les outils (311).

2. Procédé suivant la revendication 1, caractérisé par le fait que le contrôle de collision s'effectue à l'aide des données obtenues par le palpage et de données d'outils ou de trajectoire d'outils enregistrées dans une mémoire (9).

3. Procédé suivant la revendication 2, caractérisé par le fait que la mémoire (9) présente des emplacements de mémoire qui sont associés à des points d'image d'un dispositif de visualisation (10).

4. Procédé suivant la revendication 2, caractérisé par le fait qu'en vue de la simulation graphique d'opérations d'usinage, la pièce (35), les moyens de bridage (34) et les outils (311) sont représentés graphiquement sur un dispositif de visualisation.

5. Procédé suivant la revendication 1, caractérisé par le fait que l'opération de palpage s'effectue à l'aide d'une tête palpeuse multiaxes (7) à commutation .

6. Procédé suivant la revendication 1, caractérisé par le fait que l'opération de palpage s'effectue à l'aide d'une tête palpeuse multiaxes (27) de mesure.

7. Procédé suivant la revendication 1, caractérisé par le fait que la tête palpeuse (7) décrit, pendant l'opération de palpage, au moins une trajectoire de palpage en méandres.

8. Procédé suivant la revendication 7, caractérisé par le fait que la tête palpeuse (7) décrit, pendant l'opération de palpage, au moins deux trajectoires de palpage en méandres qui s'étendent de préférence à angle droit l'une par rapport à l'autre.

9. Procédé suivant la revendication 1, caractérisé par le fait que la tête palpeuse (7) décrit, pendant l'opération de palpage, des cercles concentriques.

10. Procédé suivant la revendication 1, caractérisé par le fait que la tête palpeuse (7) décrit, pendant l'opération de palpage, une trajectoire de palpage en spirale.
